# EUROPEAN PATENT APPLICATION

(11) **EP 4 679 874 A1**
(43) Date of publication of application: **14.01.2026**
(21) Application number: 24766825.4
(22) Date of filing: 16.02.2024
(51) Int. Cl.: H04W 12/0431, H04W 76/15, H04W 76/30, H04W 84/12, H04W 88/08

(54) **COMMUNICATION DEVICE, CONTROL METHOD, AND PROGRAM**

(30) Priority: 07.03.2023 JP 2023034843
(71) Applicant: Canon Kabushiki Kaisha, Tokyo, 146-8501 (JP)
(72) Inventor: YOSHIKAWA Yuki, Tokyo 146-8501 (JP)
(74) Representative: Canon Europe Limited
(86) International application number: PCT/JP2024/005435
(87) International publication number: WO 2024/185454

(57) **Abstract**

An access point device that performs communication with a station device establishes a link for performing communication with a station, generates an encryption key for encrypting the communication with the station device, and shares information about the encryption key with another access point device.

## Description

### Technical Field

The present invention relates to a communication device compliant with IEEE 802.11.

### Background Art

With a recent increase in the amount of data communicated, development of communication techniques such as a wireless local area network (LAN) has advanced. As a major communication standard for the wireless LAN, the Institute of Electrical and Electronics Engineers (IEEE) 802.11 standard series is known. The IEEE 802.11 standard series includes standards such as IEEE 802.11 a/b/g/n/ac/ax/be (Patent Literature 1).

In the IEEE 802.11be standard, for example, multi-link communication by which one access point (AP) establishes a plurality of links with one station (STA) via a plurality of different frequency channels and concurrently performs communication has been discussed. Two or more links may be selected from the same frequency band (any of the 2.4 GHz band, 3.6 GHz band, 4.9 and 5 GHz bands, and 6 GHz band), or may be respectively selected from different frequency bands. An AP and an STA that support multi-link are referred to as an AP MLD (Multi-Link Device) and an STA MLD (or non-AP-MLD).

### Citation List

### Patent Literature

PTL 1: Japanese Patent Laid-Open No. 2018-50133

### Summary of Invention

### Technical Problem

Incidentally, in the IEEE 802.11be standard and a successor standard, improving the mobility of communication by causing a plurality of physically different access points to cooperatively operate has been discussed. In this case, it has been considered to use a procedure for establishing links between an STA and two or more physically different access points and a communication procedure formulated by the above-described multi-link function as a mechanism for controlling communication. Specifically, it has been considered to improve usability by coordinating each AP through sharing of one logical upper MAC layer among a plurality of APs.

However, in a case where the plurality of physically different APs is coordinated to operate as one logical AP MLD, how to handle a communication key managed by the AP MLD has not been conventionally considered.

### Solution to Problem

Exemplary embodiments of the present invention have been made in view of at least one of the above-described issues. According to one aspect of the present invention, the present invention is directed to providing a mechanism for appropriately sharing a communication key among a plurality of physically different APs that logically function as one AP MLD. According to another aspect of the present invention, the present invention is directed to enhancing convenience of connection when two or more physically different access points are connected with one STA.

In order to achieve the above, a communication apparatus according to an aspect of the present invention is an access point device that performs communication with a station device, and includes establishment means for establishing a link for performing communication with the station device, generation means for generating an encryption key for encrypting the communication with the station device, and sharing means for sharing information about the encryption key with another access point device different from the access point device.

### Advantageous Effects of Invention

According to one aspect of the present invention, it is possible to appropriately share a communication key among a plurality of physically different APs that logically function as one AP MLD. According to another aspect of the present invention, it is possible to enhance convenience of connection when two or more physically different access points are connected with one STA.

### Brief Description of Drawings

[Fig. 1] Fig. 1 illustrates a network configuration example.
[Fig. 2] Fig. 2 is a diagram illustrating a hardware configuration example of an AP and an STA.
[Fig. 3] Fig. 3 is a diagram illustrating a functional configuration example of the AP and the STA.
[Fig. 4] Fig. 4 is a flowchart illustrating connection processing according to a first exemplary embodiment.
[Fig. 5] Fig. 5 is a sequence example according to the first exemplary embodiment.
[Fig. 6] Fig. 6 is a sequence example according to the first exemplary embodiment.
[Fig. 7] Fig. 7 illustrates a configuration example of a Multi-Link Element according to an exemplary embodiment.
[Fig. 8] Fig. 8 is a flowchart illustrating connection processing according to a second exemplary embodiment.
[Fig. 9] Fig. 9 is a sequence example according to the second exemplary embodiment.
[Fig. 10] Fig. 10 is a sequence example according to Second exemplary embodiment.
[Fig. 11] Fig. 11 is a sequence example according to the second exemplary embodiment.

### Description of Embodiments

Hereinafter, exemplary embodiments of the present invention will be described in detail with reference to the accompanying drawings. Note that the configurations described in the following exemplary embodiments are merely examples, and the present invention is not limited to the illustrated configurations.

### (Configuration of Wireless Communication System)

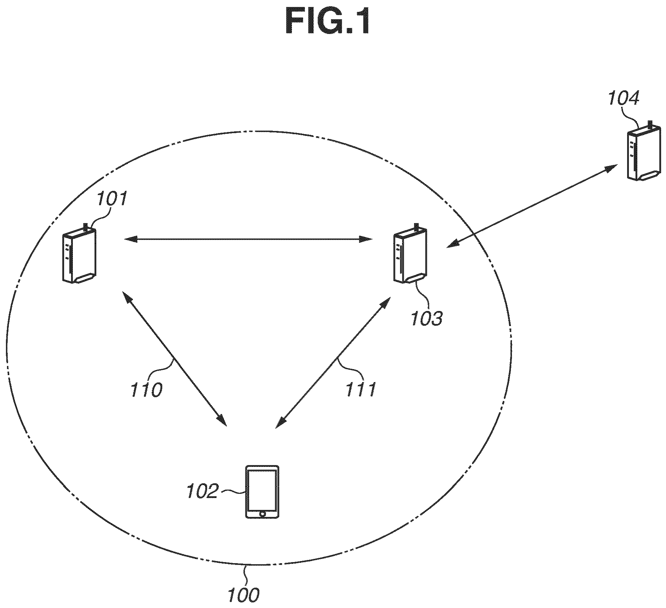

Fig. 1 illustrates a configuration example of a network according to an exemplary embodiment of the present invention. Fig. 1 illustrates a configuration in which an STA 102, which is a station (terminal), participates in a network 100 constructed by an AP 101, which is an access point (base station). The AP 101, an AP 103, and an AP 104 cooperate with each other and logically function as one AP MLD. More specifically, the APs cooperate to function, at least logically, as one upper MAC layer. Further, each AP functions as one AP MLD by coordinating a function thereof as a lower MAC layer with a function thereof as one logical upper MAC layer. This means that three physically different APs function as one AP MLD as viewed from the STA. Hereinafter, provision of the function as one logical upper MAC by a plurality of APs may also be simply referred to as sharing of an upper MAC layer.

While the present exemplary embodiment illustrates a case where a plurality of APs cooperates with each other to share an upper MAC layer, thereby forming one logically identical AP MLD, the method for sharing the upper MAC layer is not limited thereto. For example, it is possible to employ a configuration in which functionality as an upper controller that plays the role of an AP MLD is provided externally to allow a plurality of APs to cooperate with the upper controller, thereby sharing an upper MAC layer. It is also possible to employ a configuration in which part of the functionality as an upper controller is provided on a cloud server (not illustrated), and a function that operates on the cloud server and a function provided by each AP are allowed to cooperate with each other to thereby implement one logical upper MAC layer.

In the network configuration example, the STA 102 can transmit and receive signals transmitted and received by the AP 101 and the AP 103. The AP 101 can directly transmit and receive signals to and from the AP 103. The AP 103 can directly transmit and receive signals to and from the AP 101 and the AP 104. The AP 104 can directly transmit and receive signals to and from the AP 103. Communication between the APs may be performed directly, or may be performed via a server that provides the functionality as the above-described upper controller, or via a communication device that provides the functionality as the above-described cloud server. While, in the network configuration example, the case is described in which the communication between the APs is performed via wireless communication, this is not limiting. For example, it is possible to employ a configuration in which the communication between the APs is directly performed via Ethernet^{®} or a wired cable such as an optical fiber.

The AP 101, the STA 102, the AP 103, and the AP 104 are each configured to be capable of executing communication of a wireless frame compliant with a successor standard of IEEE 802.11be, i.e., a successor standard aiming at improvement in reliability and achievement of low latency. Similarly, the STAs 102 and 103 are each configured to be capable of executing the communication of a wireless frame compliant with the successor standard. IEEE stands for the Institute of Electrical and Electronics Engineers. In view of the above, in the present exemplary embodiment, the successor standard that is the successor to IEEE 802.11be and aims at improvement in reliability and achievement of low latency is also referred to as IEEE 802.11 Ultra High Reliability (UHR). A wireless frame to be communicated in the successor standard is also referred to as a UHR PPDU. PPDU stands for a PLCP Protocol Data Unit. PLCP stands for a Physical Layer Convergence Protocol.

The name "IEEE 802.11 UHR" or "UHR standard" is provided for convenience based on a goal to be achieved by the successor standard and key features of the standard, and may be changed to another name when the standard is finalized. On the other hand, note that the present specification and the attached claims are essentially applicable to all successor standards that are successors to the 802.11be standard.

Each communication device can perform communication in a frequency band such as the 2.4 GHz, 3.6 GHz, 5 GHz, or 6 GHz band, or a millimeter-wave band such as the 45 GHz band or 60 GHz band. The frequency band used by each communication device is not limited to the above, and may be a different frequency band, such as a Sub-1 GHz band. The AP 101 and the STA 102 can perform communication using bandwidths of 20 MHz, 40 MHz, 80 MHz, 160 MHz, 320 MHz, 540 MHz, 640 MHz, 1080 MHz, and 2160 MHz. The bandwidths used by each communication device are not limited to the above, and for example, different bandwidths such as 240 MHz and 4 MHz may also be used.

The AP 101, the STA 102, the AP 103, and the AP 104 support the IEEE 802.11 UHR standard, and in addition, may also support legacy standards prior to the IEEE 802.11 UHR standard. Specifically, the AP 101, the STA 102, the AP 103, and the AP 104 may support at least one of the IEEE 802.11a/b/g/n/ac/ax/be standards. The AP 101, the STA 102, the AP 103, and the AP 104 may support not only the IEEE 802.11 series standards, but also other communication standards such as Bluetooth^{®}, NFC, UWB, ZigBee, and MBOA. UWB stands for Ultra-Wideband, and MBOA stands for Multi Band OFDM Alliance. NFC stands for Near Field Communication. The UWB includes wireless USB, Wireless 1394, WiNET, and the like. The AP 101, the STA 102, the AP 103, and the AP 104 may also support communication standards for wired communication such as a wired LAN. Specific examples of the AP 101, the AP 103, and the AP 104 include a wireless LAN router and a personal computer (PC), but these are not limiting. The AP 101 may be an information processing device such as a wireless chip that can execute wireless communication compliant with the IEEE 802.11 UHR standard. Specific examples of the STA 102 include a camera, a tablet, a smartphone, a PC, a mobile phone, a video camera, a headset, a network camera, a printer, and a projector, but are not limited thereto. The STA 102 may be an information processing device such as a wireless chip that can execute wireless communication compliant with the IEEE 802.11 UHR standard.

The AP 101, the STA 102, the AP 103, and the AP 104 perform multi-link communication by establishing a plurality of links via a plurality of frequency channels. An AP capable of performing the multi-link communication is also referred to as an AP Multi-Link Device (MLD). For example, the AP 101 establishes a link 110 with the STA 102 via a first frequency channel in 5 GHz band, thereby making it possible to communicate with the STA 102. In parallel with this communication, the STA 102 can establish a link 111 with the AP 103 via a second frequency channel in 6 GHz band, thereby making it possible to communicate with the AP 103. In this case, the AP 101 and the AP 103 cooperate with each other to thereby form an AP MLD. Accordingly, the STA 102 can execute the multi-link communication in which the second link 111 that is via the second frequency channel can be maintained in parallel with the link 110 that is via the first frequency channel. Thus, the AP 101 and the AP 103 establish links with the STA 102 via the plurality of frequency channels, thereby making it possible to improve throughput in communication with the STA 102.

In multi-link communication, a plurality of links in different frequency bands may be established as links between the communication devices. For example, the STA 102 may establish a third link in 2.4 GHz band with the AP 101 in addition to the link 110 in 5 GHz band with the AP 101 and the link 111 in 6 GHz band with the AP 103. Alternatively, the plurality of links may be established via a plurality of different channels included in the same frequency band. For example, the STA 102 may establish the second link with the AP 103 using channel 161 in the 5 GHz band in addition to the first link with the AP 101 using channel 36 in the 5 GHz band. Links may be established such that links using the same frequency band and links using different frequency bands coexist. For example, the STA 102 may establish the link via channel 35 in 6 GHz band with the AP 101 and the link via channel 6 in 2.4 GHz band with the AP 103 in addition to the link 110 via channel 2 in the 6 GHz band with the AP 101. The AP 101, by establishing a plurality of connections using different frequencies with the STA 102, can establish communication in another bandwidth with the STA 102 in a case where a certain bandwidth is congested,, thereby preventing a communication delay and a decrease in throughput of the communication with the STA 102.

A link ID is assigned to each link for each network that constructs the link. For example, consider a case where the STA 102 participates in a network of the 5 GHz band among networks constructed by the AP 101, the AP 103, and the AP 104. When a link established between the STA 102 and the AP 101 using the channel 36 in the 5 GHz band is referred to as the link 110, a link ID = 1 is assigned to this link. Similarly, since the same link ID is assigned to each network, in a case where an STA that is different from the STA 102 establishes a link with the AP 101 using the channel 36 in the 5 GHz, the link ID of this link is "1". Further, when the STA 102 participates in the network in the 6 GHz band and a link constructed herein is referred to as the link 111 a link ID = 2 is assigned to this link. This value is merely an example, and another value may be assigned, and a link ID may be assigned to each constructed link or each STA.

In the IEEE 802.11 series standards, the bandwidth of each frequency channel in the 2.4 GHz band, 5 GHz band, and 6 GHz band is defined as 20 MHz. In addition, the bandwidth of each frequency channel in 45 GHz band is defined as 540 MHz, and the bandwidth in the 60 GHz band is defined as 1080 MHz or 2160 MHz. The frequency channel described herein refers to a frequency channel defined in the IEEE 802.11 series standards, and a plurality of frequency channels is defined in each of the frequency bands of the 2.4 GHz band, 5 GHz band, 6 GHz band, 45 GHz band, and 60 GHz band. By bonding adjacent frequency channels, a bandwidth of 40 MHz or more in one frequency channel may be used.

### (Configurations of AP and STA)

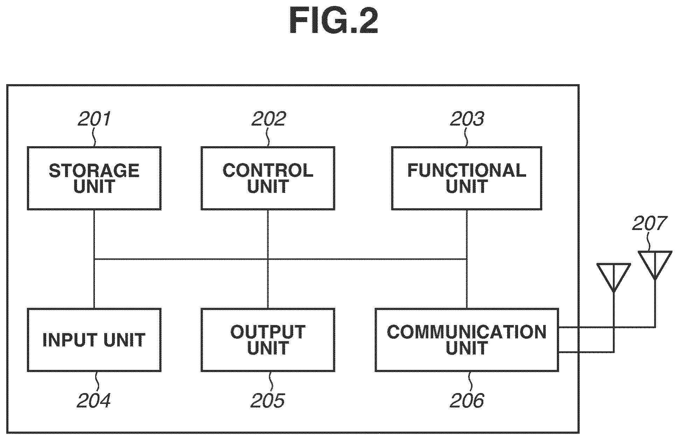

Fig. 2 illustrates a hardware configuration example of the AP 101 according to the present exemplary embodiment. The AP 101 includes a storage unit 201, a control unit 202, a functional unit 203, an input unit 204, an output unit 205, a communication unit 206, and an antenna 207. A plurality of antennas may be used.

The storage unit 201 is composed of one or more memories such as a ROM and a RAM, and stores computer programs for performing various operations to be described below, and various kinds of information such as communication parameters for wireless communication. ROM stands for read-only memory, and RAM stands for random access memory. As the storage unit 201, not only the memories such as a ROM and a RAM, but also storage media such as a flexible disk, a hard disk, an optical disk, a magneto-optical disk, a CD-ROM, a CD-R, a magnetic tape, a non-volatile memory card, and a DVD may be used. The storage unit 201 may include a plurality of memories and the like.

The control unit 202 is composed of one or more processors such as a CPU and an MPU, and executes computer programs stored in the storage unit 201, thereby controlling the entire AP 101. The control unit 202 may control the entire AP 101 in cooperation with the computer programs and an operating system (OS) stored in the storage unit 201. Further, the control unit 202 generates data and signals (wireless frames) to be transmitted in communication with another communication device. Note that CPU stands for central processing unit, and MPU stands for micro processing unit. The control unit 202 may include a plurality of processors, such as a multi-core processor, and the plurality of processors may control the entire STA 102.

Further, the control unit 202 controls the functional unit 203 to execute wireless communication and predetermined processing such as image capturing, printing, and projection. The functional unit 203 is hardware for the AP 101 to execute the predetermined processing.

The input unit 204 receives various operations from a user. The output unit 205 performs various outputs for the user via a monitor screen or a speaker. Herein, an output from the output unit 205 may be displayed on the monitor screen, an audio output from the speaker, a vibration output, or the like. The input unit 204 and the output unit 205 may be implemented as one module such as a touch panel. Further, the input unit 204 and the output unit 205 may be integrated with or separate from the AP 101.

The communication unit 206 controls wireless communication compliant with the IEEE 802.11 UHR standard. Further, the communication unit 206 may control wireless communication compliant not only with the IEEE 802.11 UHR standard but also with other IEEE 802.11 series standards, and may control wired communication such as a wired LAN. The communication unit 206 controls the antenna 207 to transmit and receive signals generated by the control unit 202 for wireless communication.

In a case where the AP 101 supports not only the IEEE 802.11 UHR standard, but also an NFC standard, Bluetooth standard, or the like, the AP 101 may control wireless communication compliant with these communication standards. Further, in a case where the AP 101 can perform wireless communication compliant with the plurality of communication standards, the AP 101 may be configured to include communication units and antennas compliant with the respective communication standards. The AP 101 communicates data such as image data, document data, and video data with the STA 102 via the communication unit 206. The antenna 207 may be configured separately from the communication unit 206, or may be integrally formed with the communication unit 206 as one module.

The antenna 207 is an antenna capable of performing communication in the 2.4 GHz band, 5 GHz band, 6 GHz band, 45 GHz band, and 60 GHz band. In the present exemplary embodiment, the AP 101 includes two antennas, but instead may include three antennas. Further, the AP 101 may include different antennas for the respective frequency bands. In a case where the AP 101 includes a plurality of antennas, the AP 101 may include communication units 206 corresponding to the respective antennas.

The STA 102, the AP 103, and the AP 104 each have a hardware configuration similar to that of the AP 101.

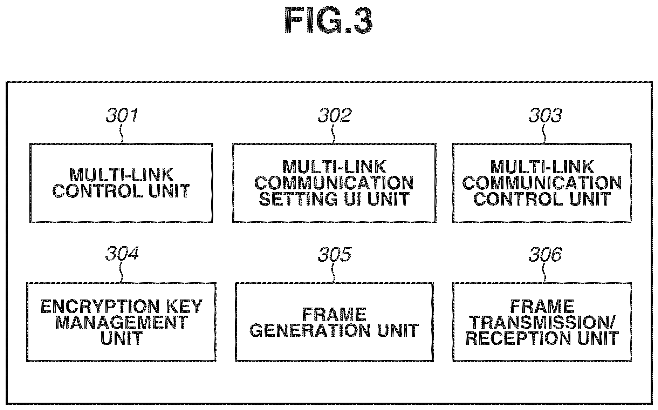

Fig. 3 is a block diagram illustrating a functional configuration of the AP 101 according to the present exemplary embodiment. Note that the AP 103, the AP 104, and the STA 102 have similar configurations.

The AP 101 includes a multi-link control unit 301, a multi-link communication setting UI unit 302, a multi-link communication control unit 303, an encryption key management unit 304, a frame generation unit 305, and a frame transmission/reception unit 306.

The multi-link control unit 301 is a block for controlling communication start processing for establishing one or more links used by the AP 101 in wireless communication with the STA 102, link addition/deletion processing after the communication is started, and communication termination processing to delete all links. Specifically, connection processing is composed of authentication processing, association processing, and 4-way-hand-shake (4WHS) processing. Each key generated by 4WHS is transferred to the encryption key management unit 304.

The multi-link communication setting user interface (UI) unit 302 is a block for providing a UI for the user to input multi-link communication settings for the AP 101 from an operation screen of the AP 101. The multi-link communication setting UI unit 302 may provide a UI to a display unit included in a device separate from the AP 101. For example, the AP 101 may be configured to display a UI for a server cooperating with the AP 101, another AP, or another communication device such as a PC. In this case, assume that settings are received by a user operation performed on an input unit of the separate device.

In the case of performing communication using the links established by the multi-link control unit 301, the multi-link communication control unit 303 manages a state of being connected as the AP MLD with a STA MLD. For example, even if the AP 101 has not established a link with STA 102, if the AP 103 has established a link with the STA 102, the AP 101 is in the state of being connected as the AP MLD with the STA MLD. Whether the AP is being connected with or disconnected from the STA 102 is managed based on communication between the APs and communication with the STA.

The encryption key management unit 304 manages an encryption key for encrypting communication with a peer STA. The management unit 304 manages the encryption key generated as a result of connection processing by the multi-link control unit 301, and holds the encryption key while the connected state is maintained by the multi-link communication control unit 303. Further, the management unit 304 discards the encryption key held by the encryption key management unit when the connected state is changed to a disconnected state, or when a predetermined period has elapsed since the connected state is changed to the disconnected state. The encryption key management unit 304 may also be configured to manage not only an encryption key, but also information necessary for generating the encryption key.

The frame generation unit 305 is a block for generating a frame for frame replacement in communicating with the connected STA. The frame generated by the generation unit 305 is the above-described UHR PPDU.

The frame transmission/reception unit 306 performs transmission of wireless frames including a Probe Request frame and a data frame generated by the frame generation unit 305, and reception of wireless frames from a counterpart device.

### (Processing Flow)

Next, some exemplary embodiments of a processing flow to be executed by the APs and the STA as described above, a sequence in a wireless communication system, and the like will be described.

### (First Exemplary Embodiment)

In the present exemplary embodiment, processing from connection to the STA 102 to disconnection therefrom in the AP 101 is described. In the present exemplary embodiment, the AP 101, the AP 103, and the AP 104 cooperate with each other to thereby form an AP MLD. At the time of connection between the AP 101 and the STA 102, a Pairwise Master Key (PMK) and a Pairwise Transient Key (PTK) are shared among APs included in the AP MLD, and the PMK and PTK are discarded at the time of disconnection. A predetermined period may be provided from the disconnection until the PMK and PTK are discarded.

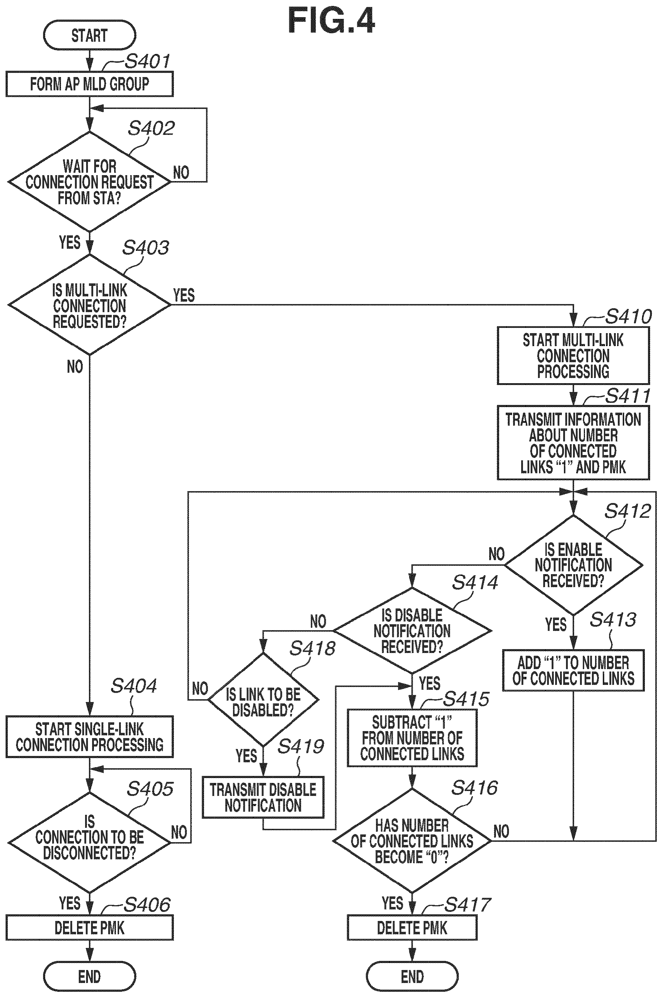

Fig. 4 is a flowchart illustrating a processing flow performed by a control unit 302 executing programs stored in a storage unit 301 of the AP 101. This flowchart illustrates processing in which the AP 101 starts an operation as an AP, is connected with, and is disconnected from the STA 102. This processing is started when the function as the AP is started, for example, when the AP 101 is powered on, when the AP 101 receives an instruction to operate as an AP, or when a wireless function is turned on. While only the STA 102 is connected in the exemplary embodiment, a plurality of STAs may be simultaneously connected.

The AP 101 forms a group to form an AP MLD with another AP (S401). As a group forming method used herein, for example, an inquiry about a group is sent to a preset address, and APs included in the group can be grasped based on a list obtained by inquiring. Alternatively, a request may be sent to APs in the vicinity, and whether each AP belongs to the same AP MLD may be determined based on a response from the AP.

Further, it is also possible to configure such that the group forming the AP MLD can be designated by the user using a UI or the like. In this case, the multi-link communication setting UI unit 302 of the AP 101 cooperates with the AP 101 to thereby display a setting screen for selecting some other APs that can form the AP MLD. Further, it is possible to prompt the user to select, via the setting screen, which other APs to cooperate with to form the AP MLD. In this case, it is possible to configure such that information about one or more other APs selected via the above-described setting screen is stored as the above-described preset address.

Other APs that can cooperate with the AP 101 to form the AP MLD are not limited to other APs within the range in which the AP 101 can directly communicate. For example, in Fig. 1, the AP 101 and the AP 104 cannot directly communicate with each other. However, even in such a case, the AP 101 and the AP 104 can cooperate with each other by communicating via the AP 103 (or the cloud server).

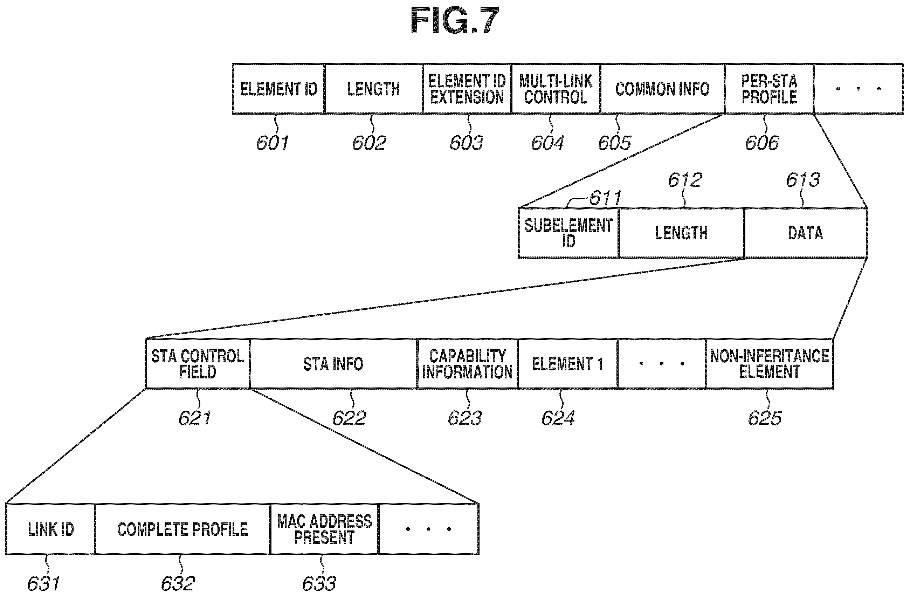

Next, the AP 101 waits for a connection request from the STA 102 (S402). The connection request from the STA is, for example, a Probe Request frame or an Association Request frame. Upon receiving these frames, it is confirmed whether the STA is attempting to connect via a Single-Link or attempting to receive via a Multi-Link (S403). This is determined based on, for example, whether the received frame includes a Multi-Link Element. The Multi-Link Element can include information about another link. For example, information collected in a millimeter-wave band may be added thereto. Fig. 7 illustrates an example of the Multi-Link Element.

The Multi-Link Element includes Element ID 601, Length 602, Element ID Extension 603, Multi-Link Control 604, Common Info 605, and Per-STA Profile 606. In the present exemplary embodiment, one fewer Per-STA Profiles 606 are present than the number of links.

The Element ID 601 and the Element ID Extension 603 indicate that this element is a Multi-Link Element. The Length 602 indicates the length of the entire Multi-Link Element.

The Multi-Link Control 604 includes a bitmap indicating what kind of information is included in the Common Info field to be described below, and a Type field indicating the type of the Multi-Link Element.

The Common Info field 605 includes information common to the established links. Based on a value indicated in the Multi-Link Control, it is determined whether the Multi-Link Element includes an MLD MAC Address or the like.

With regard to the Per-STA Profile 606, whether this field 606 is included in the Multi-Link Element is determined based on the type of Type of the above-described Multi-Link Control 604.

The Per-STA Profile 606 includes information about each link.

The Per-STA Profile 606 is composed of Subelement ID 611, Length 612, and Data 613. The Data 613 includes details of the information about each link described below.

The Data 613 includes an STA Control field 621, STA Info 622, Capability Information 623, Element 1 624, and Non-Inferitance Element 625.

The STA Control field 621 includes Link ID 631, Complete Profile 632, and MAC Address Present 633. The Link ID 631 indicates a link number. For example, in the present exemplary embodiment, the Link ID 631 indicates "1" representing the link 103 illustrated in Fig. 1, and indicates "2" representing the link 104. In this case, the STA 102 identifies which link ID is held by the AP from which a Beacon is received, and indicates connection to the identified link ID. For example, consider a case where the AP 101 has Link ID = 1, the AP 103 has Link ID = 2, the AP 104 has Link ID = 3, and the STA 101 has received only a Beacon from the AP 101. In this case, only one Per-STA Profile 606 in which "1" is set in the Link ID 631 is present. In a case where Beacons from the AP 101 and the AP 103 are received, two Per-STA Profiles 606 are present, and "1" and "2" are respectively set in Link IDs 631.

In the Complete Profile 632, a flag is set to indicate whether all pieces of information about the links are to be included. For example, when the STA 102 responds to a request for all the pieces of information about the links of the AP 101, "1" is set in the Complete Profile 632, and in the fields following 622, all pieces of information to be included in the Beacons transmitted on each link are included. In a case where an element is assigned commonly across a plurality of links, the element may be omitted from the Element 1 field 624. Similarly, information that does not need to be notified prior to connection may be omitted.

In a case where "0" is set in the Complete Profile 632, some or all of the elements to be included in the Element 1 field 624 may be omitted. Fields following the MAC Address Present 633 indicate which fields, in addition to those specified in the STA Info 622, are present.

In this example, Complete Profile 632 = 0 is set in a Beacon or a Probe Request/Response. Further, Complete Profile 632 = 1 is set in an ML Probe Request/Response used in an MLD setup described below. Note that the ML Probe Request/Response is used to perform communication to obtain information about an AP and STA operating in other frequency bands in Multi-Link. Note that the Complete Profile field may be Complete Profile Requested.

Elements unique to each link are added to the fields from the Element 1 624 to the field before the Non-Inferitance Element 625.

With reference again to Fig. 4, in S403, the AP 101 receives, from the STA 102, the Multi-Link Element in which information about each link is added to the Per-STA Profile field 606 using the ML Probe Request. Further, the AP 101 obtains information unique to each link, or the link number for which information is requested by the STA 102 from the received ML Probe Request. Also, in the AP 101, the Multi-Link Element is added to a frame to be returned, thereby making it possible to transmit information about another link or AP to the STA 102.

For example, an Extended Multi-Link Element may be prepared, and it may be determined that a connection form in which an AP MLD is implemented by a plurality of APs is supported only when a field External AP Bit in the Extended Multi-Link Element is ON. This makes it possible to clearly indicate whether the APs that are a plurality of APs operating as an AP MLD are supported. The STA to be connected to the AP can recognize a BSS transition notification received from each AP as a link transition notification and can also select a link from the received Beacon from a peer AP. The AP can select a frame to be transmitted to the STA based on this configuration.

In S403, when the STA 102 does not desire connection via Multi-Link, for example, the AP 101 and the STA 102 start connection processing as Single-Link (S404). In this case, the AP 101 and the STA 102 perform authentication processing and 4-way handshake processing, and generate PMK and PTK that are information about an encryption key for encrypting the communication. If the connection processing fails, the AP 101 may reject the connection with the STA 102. In data communication, PTK is generated using PMK, and communication is performed using a signal encrypted using TK obtained from the PTK. After the connection is completed, it is checked whether the STA is to be disconnected (S405), and the PMK and PTK are deleted after a lapse of a predetermined period from the disconnection (S406). If a connection request is issued again from the STA before the PMK and PTK are deleted, the PMK and PTK may not be deleted, and the PMK and PTK may be reused in the next communication.

When a multi-link connection is requested, the AP 101 starts the connection processing as Multi-Link (S410). In this case, the PMK and PTK, which are the information about an encryption key for encrypting the communication, are generated by authentication and 4-way handshake. If the connection processing fails, the STA 102 may reject the connection. After the connection is completed, the AP 101 sets the number of connected links with the STA 102 to "1" and transmits the generated PMK and PTK together with information about the STA 102 (S411). At this time, Enable that indicates that a link has been established may also be sent, or a notification of PMK and PTK may be treated as an Enable notification. Information about the STA 102 used herein refers to information for identifying the STA 102 or an encryption method for communication with the STA 102, and examples thereof include a MAC address and an Association ID (AID) of the STA 102. In this case, the AP 101 shares information about the encryption key with other APs that form the AP MLD. In this case, the AP 101 and the other APs (AP 103, AP 104) directly communicate with each other to thereby share information about the encryption key. In a case where the AP 101 and the other APs (AP 103, AP 104) cooperate with each other via a server and form an AP MLD, the AP 101 and the other APs share information about the encryption key via the server. In a case where the AP 101 shares information about the encryption key with the other APs, the AP 101 encrypts the information about the encryption key and transmits the information, which can enhance the security. If the AP 101 and the other APs have established a wireless backhaul link, the AP 101 may encrypt data using a PTK shared between the other APs to perform encrypted communication between the APs. In this case, the other APs can decrypt the encrypted data using the PTK for communication with the AP 101, thereby obtaining the PTK and PMK to be used for communication with the STA. The encryption method is not limited thereto. For example, the AP 101 and the other APs may exchange a common key using a key exchange algorithm such as EDCHE, and use the common key to encrypt the PTK and PMK to be used in the communication with the STA, and data obtained by encryption may be transmitted to the other APs. EDCHE stands for Elliptic Curve Diffie-Hellman Ephemeral. In this case, the other APs may decrypt the received encrypted data using the common key derived by EDCHE processing. In a case where a server is used, it is possible to employ a configuration in which encryption is performed in an upper layer, such as Transport Layer Security (TLS), to share the PTK. In this case, the AP 101 establishes a TLS session with the server, and transmits the PTK and PMK to be used in the communication with the STA to the server using the session. Also, in the case of transmitting PTK and PML to the other APs from the server, a TLS session may be established between the server and the other APs, and the PTK and PMK may be transmitted using the session.

Next, processing performed during connection with the STA 102 will be described. First, the AP 101 checks whether an Enable notification indicating that a new connection to the STA 102 has been established is received from another AP (S412). If the Enable notification is received, "1" is added to the number of connected links. In this case, via which link the STA 102 is connected may also be managed.

Further, the AP 101 checks whether a Disable notification indicating the disconnection from the STA 102 is received from the other AP (S414). If the Disable notification is received, "1" is subtracted from the number of connected links (S415). After the number of connected links is subtracted, when the number of connected links has become "0", it is determined that the STA 102 is disconnected from the AP MLD (S416). After a lapse of a predetermined period from the disconnection, the PMK and PTK are deleted (S417). Specifically, in S414, the AP 101 receives the Disable notification, which is the information indicating that the connection with the STA 102 is disconnected, from the other AP that shares the information about the encryption key by the AP 101 forming the AP MLD. In this case, if neither the AP 101 nor the other AP, which form the AP MLD to share the information about the encryption key, is connected with the STA 102 (the number of connected links is 0), the PMK and PTK are deleted after the lapse of a predetermined period.

If the AP 101 is connected with the STA 102 again or the Enable notification is received from the other AP during the predetermined period before the PMK is deleted, the processing may return to S412 without deleting the PMK. After that, in the communication with the STA 102, the PMK is reused. At this time, because another PTK is used, the 4-way handshake is performed again.

The AP 101 also checks whether to disable the link between the AP 101 itself and the STA 102 (S418). This checking is performed, for example, when a regular Deauthentication frame is received from the STA 102, when a frame indicating Remove of the link is received from the STA 102, when an instruction to disconnect from the STA 102 is received from the user, or after a lapse of a predetermined period from when the communication with the STA 102 or a heartbeat for confirming the location is disconnected. In the case of disconnection, a Disable notification indicating that the link is disconnected is transmitted to the other AP (S419). Then, the processing proceeds to S415. The processing may return to S417 in a case where a regular Deauthentication notification is received from the STA 102, or when an instruction to disconnect from the STA 102 is received from the user. In this case, a notification indicating the disconnection from the STA 102 may be sent to the other AP separately from the Disable notification.

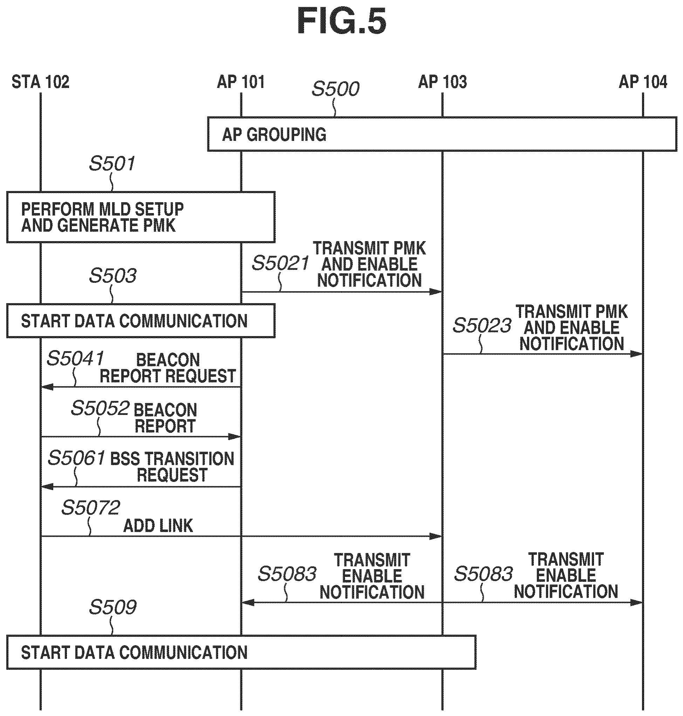

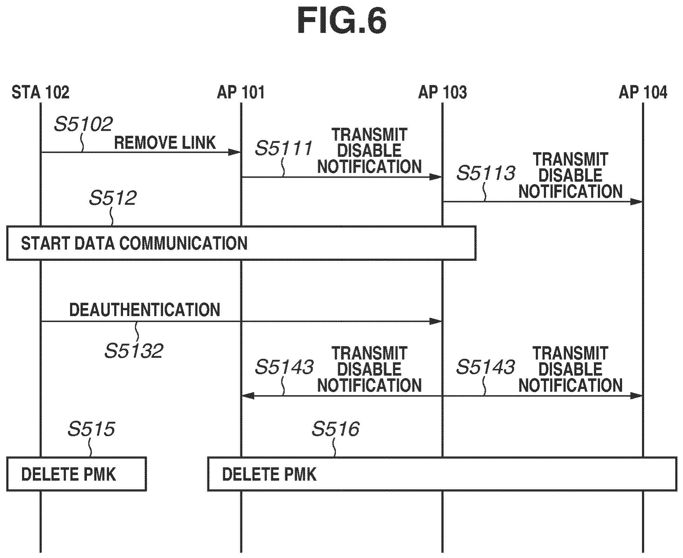

Next, Fig. 5 illustrates a sequence in which the AP 101 and the STA 102 start communication and further connect to the AP 103. Fig. 6 illustrates a subsequent sequence from disconnection of the communication between the AP 101 and the STA 102 to disconnection of communication between the AP 103 and the STA 102.

First, the AP 101, the AP 103, and the AP 104 form an AP MLD based on the processing of S401 in Fig. 4 (S500).

After that, a connection request is sent from the STA 102 to the AP 101, and connection via a Multi-Link is performed. At this time, an MLD setup for exchanging ML Probe Request/Response is performed as an MLD connection, and a PMK and a PTK are generated by authentication and 4-way handshake (S501).

Next, the AP 101 transmits the generated PMK and PTK together with information about the STA 102 (S5021). At this time, Enable may also be transmitted together, or a notification about the PMK and PTK may be transmitted as Enable. The information about the STA 102 herein refers to information for identifying the STA 102 or an encryption method with the STA 102 and may be, for example, a MAC Address and an Association ID (AID). Upon receiving the Enable notification from the AP 101, the AP 103 transfers the contents to the AP 104 (S5023). Transfer and routing of notifications communicated between the APs may be arranged at the time of AP grouping, or may be notified to all APs by wired communication. In this case, the AP 101 holds addresses of and information about the other APs belonging to the AP MLD.

After the connection with the STA 102 is established, data communication between the AP 101 and the STA 102 is started based on the generated parameters and an encryption key (S503).

The AP 101 issues a Beacon Report Request to obtain information about APs in the vicinity of the STA 102 (S5041). The STA 102 returns a Beacon Report as a response to the AP (S5052). The AP 101 transmits a BSS transition request to prompt the AP 103 to establish a connection based on the information obtained from the STA 102 (S5061). However, steps S5041 to S5061 may be omitted.

The STA 102 checks whether a reception strength of the Beacon from the AP 103 is high based on a BSS transition request received from the AP 101, or by periodic scanning or scanning due to a decrease in the reception strength of the Beacon by the STA 102. Then, the STA 102 transmits an Add Link Request to add a link to the AP 103 (S5072). This may be, for example, a procedure for the AP 103 to enable the corresponding link ID by TID-to-Link Mapping, or a procedure for connecting to the AP 103 by Reassociation. These signals may be transmitted to the AP 101.

Upon receiving a link addition notification from the STA 102, the AP 103 also issues an Enable notification to the other AP (S5083). This enables each AP to recognize how many links are currently being connected with the STA 102 as the AP MLD. After a link is added to the AP 103, the STA 102 communicates with the AP 101 and the AP 103 via the respective links using a common PTK (S509). More specifically, the AP 101 and the AP 103 generate a 128-bit Temporary Key (TK) based on bit 256 to bit 383 of the generated or shared PTK. Then, the AP 101 and the AP 103 encrypt data by a CCMP method using the generated TK and a counter, and communicate the encrypted data. CCMP stands for Counter mode with Cipher-block chaining Message authentication code Protocol. An initial value of the counter and counting up of the counter may be common between the AP 101 and the AP 103, or the initial value of the counter in the AP 101 may be set separately from the initial value of the counter in the AP 103, and counting up may be performed independently at the time of transmission of respective packets.

The STA 102 issues a Remove Link notification to the AP 101 when a radio field intensity received from the AP 101 is less than or equal to a threshold (S5102). This may be performed by transmitting Deauthentication or Disassociation, or by not assigning TID to the link ID held by the AP 101 in a TID-to-Link Mapping Request.

Upon receiving the link removal notification from the STA 102, the AP 101 issues a Disable notification to the AP 103 in the vicinity (S5111). When receiving the Disable notification from the AP 101, the AP 103 transfers the content of the notification to the other AP 104 (S5113). The AP 103 and the STA 102 may reconfigure the PTK from the PMK at a timing when the link is disconnected from the AP 101. In this case, the 4-way handshake is performed again.

After the connection between the AP 101 and the STA 102 is disconnected, the AP 103 and the STA 102 perform data communication (S512). In other words, even after the AP 101 has disconnected the communication link with the STA 102, data communication can continue between the STA 102 and the AP MLD including at least the AP 103.

Next, the communication between the AP 103 and the STA 102 is terminated (S5132). In the present exemplary embodiment, a notification about disconnection is transmitted from the STA 102 to the AP 103.

After confirming the disconnection from the STA 102, the AP 103 transmits information indicating the disconnection to the AP 101 and AP 104 in the vicinity as a Disable notification (S5143). When the STA 102 has disconnected all links belonging to the AP MLD, the PMK and PTK are deleted after a lapse of a predetermined period (S515). The AP 101 and the AP 104 delete the PMK and PTK after the lapse of the predetermined period since the AP 101 and the AP 104 recognize that there is no longer a link connecting to the STA 102 as the AP MLD based on the Disable notification from the AP 103 (S516). The AP 103 deletes the PMK and PTK after the lapse of the predetermined period since the AP 103 recognizes that there is no link that connects with the STA 102 as the AP MLD based on the disconnection notification from the STA 102 (S516).

In this way, the AP 101 can appropriately generate and delete a PMK in a case where a plurality of APs forms an AP MLD when a multi-link connection is performed from the STA 102.

### (Second Exemplary Embodiment)

The first exemplary embodiment described above illustrates an example where the AP 101, the AP 103, and the AP 104 cooperate with each other so that a PMK can be shared among all APs forming an AP MLD. In the present exemplary embodiment, an example is described where a PMK is shared only with APs that are directly connected with the STA 102 and have established a link. A system configuration, and a hardware configuration and a functional configuration of each AP or STA are similar to those of the first exemplary embodiment. Further, in the present exemplary embodiment, the AP 101, the AP 103, and the AP 10 cooperate with each other to thereby form an AP MLD. In the present exemplary embodiment, the AP 101 and the STA 102 establish a connection and generate a PMK and a PTK. After that, the AP 103 and the STA 102 attempt to establish a connection. At this time, the PMK and PTK are shared by the AP 101 that forms the AP MLD that has already established the connection with the STA 102.

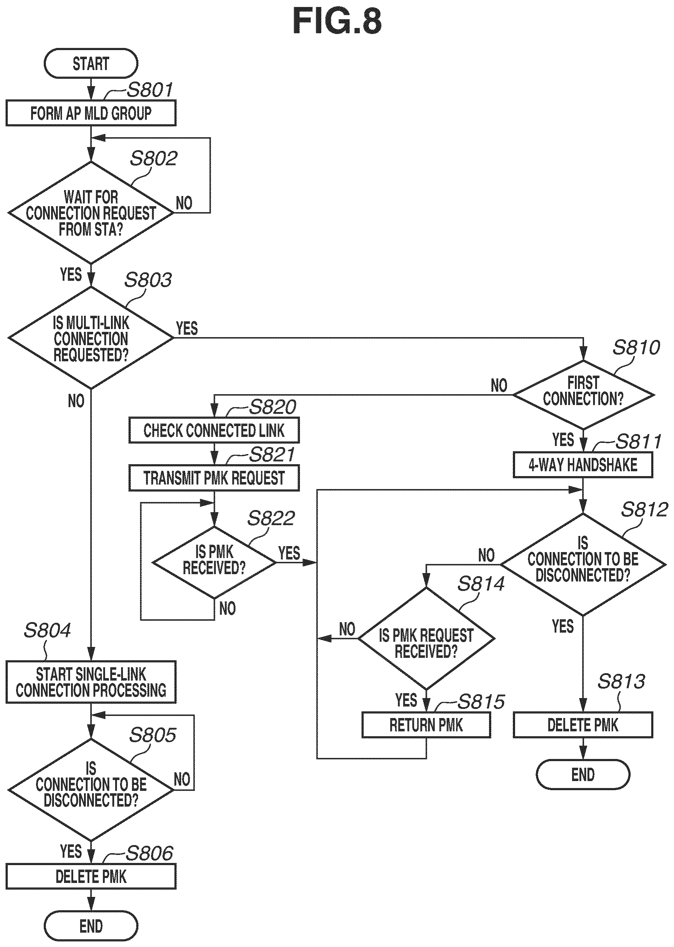

In the first exemplary embodiment, an example is described where the PMK and PTK are discarded when the connection between the STA 102 and all APs forming the AP MLD is disconnected. In the present exemplary embodiment, an example is described where each AP discards a PMK and a PTK regardless of connection of another AP when each AP and the STA are disconnected. The description will be provided below with reference to Fig. 8. As for discarding the PMK and PTK in each AP, the PMK may be discarded after a lapse of a predetermined period from the disconnection.

Fig. 8 is a flowchart illustrating a flow of processing in which the AP 101 forms an AP MLD, establishes a connection with the STA 102, and disconnects from the STA 102. The flowchart illustrates processing in which the AP 101 starts operation as an AP, establishes a connection with the STA 102, and disconnects from the STA 102. This processing is started when the function as the AP is started, for example, when the AP 101 is powered on, when the AP 101 receives an instruction to operate as an AP, or when the wireless function is turned on. In this example, the AP 101 is connected only to the STA 102, but instead may be connected to a plurality of STAs simultaneously.

The AP 101 forms a group to form an AP MLD with another AP (S801). As a group forming method used herein, for example, an inquiry about a group is sent to a preset address and APs included in the group can be grasped based on a list obtained by inquiring. Alternatively, a request may be sent to APs in the vicinity, and whether each AP belongs to the same AP MLD may be determined based on a response from the AP.

Next, the AP 101 waits for a connection request from the STA 102 (S802). The connection request from the STA is, for example, a Probe Request frame or an Association Request frame. Upon receiving these frames, it is confirmed whether the STA is attempting to connect using a Single-Link or attempting to receive using a Multi-Link (S803). This is determined based on, for example, whether the received frame includes a Multi-Link Element. The Multi-Link Element is similar to that of the first exemplary embodiment, and thus the description thereof is omitted. In addition, a case of connecting via the Single-Link as a result of the determination in S803 is similar to that of the first exemplary embodiment, and thus the description thereof is omitted.

In the case of connection via the Multi-Link, it is checked whether the AP 101 is the first to establish a connection as the AP MLD (S810). Whether the connection is the first connection may be determined based on the type of each frame or based on whether a PMK ID is specified when the peer STA has sent a connection request. As the type of each frame, for example, Association Request is treated as a new connection, and Reassociation Request or TID-to-Link Mapping Request is treated as an existing connection. For example, PMK ID may be included in Authentication. The STA 102 may include the link ID of the connection together with the PMK ID in a connection request. Inclusion of the link ID enables the AP 101 to identify the AP to which a request for the PMK is to be sent. The connection request may be a Reassociation Request. In the case of a first connection, the PMK is generated by authentication and 4-way handshake (S811). If the connection fails, the connection with the STA 102 may be rejected.

If the AP 101 is not the first to establish the connection, i.e., if another AP forming the AP MLD has already established a connection with the STA 102, or holds a PMK even after being disconnected, the determination in S801 is NO. In this case, first, the link or AP that has established the connection, or the AP that holds the PMK is checked (S820). If the PMK is not held by itself, a request for the PMK is sent to the AP that holds the PMK (S821). An inquiry about the PMK may be sent to all APs within the AP MLD group without checking the connected link. In this case, if no response is received for a predetermined period, the connection may be treated as the new connection. If a PMK and a PTK are received as a response to the request (S822), communication with the STA 102 is started. If no response to the inquiry about the PMK is received for the predetermined period, the STA may be recognized as a new STA, and the PMK and PTK may be newly generated by authentication and 4-way handshake.

If the request for PMK is received after the communication with the STA 102 is started (YES in S814), the PMK and PTK that are held by the AP itself are returned (S815). If the request for PMK includes information about the STA to be connected and the PMK and PTK to be shared with the target STA are held, the PMK and PTK are returned. If the PMK and PTK to be shared with the target STA are not held, information indicating that such PMK and PTK are not held may be returned, or no response may be returned.

A case where the connection between the STA 102 and the AP 101 is disconnected (YES in S812) is considered. This may be, for example, a case where all links with the AP 101 are disabled by Deauthentication or TID-to-Link Mapping from the STA 102, or a case where a disconnection instruction, a power-off instruction, or the like is issued by the user of the AP 101. In this case, the PMK is deleted after a lapse of a predetermined period (S813). If the AP 101 and the STA 102 establish a connection again before the PMK is deleted, the PMK may be reused. In this case, there is no need to send an inquiry about the PMK to the other APs.

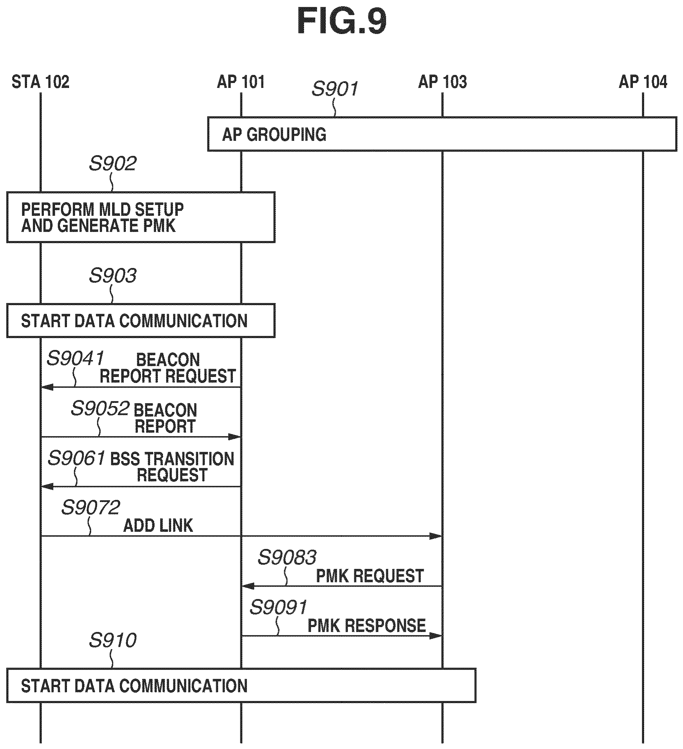

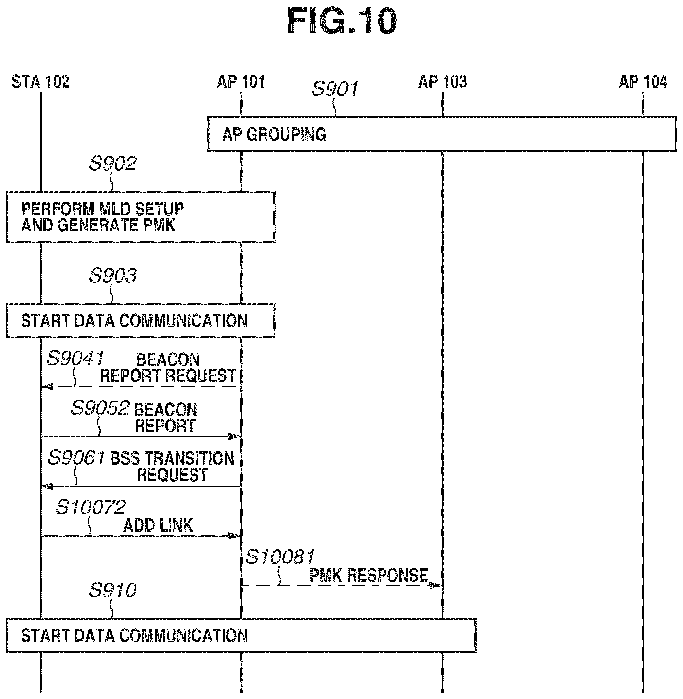

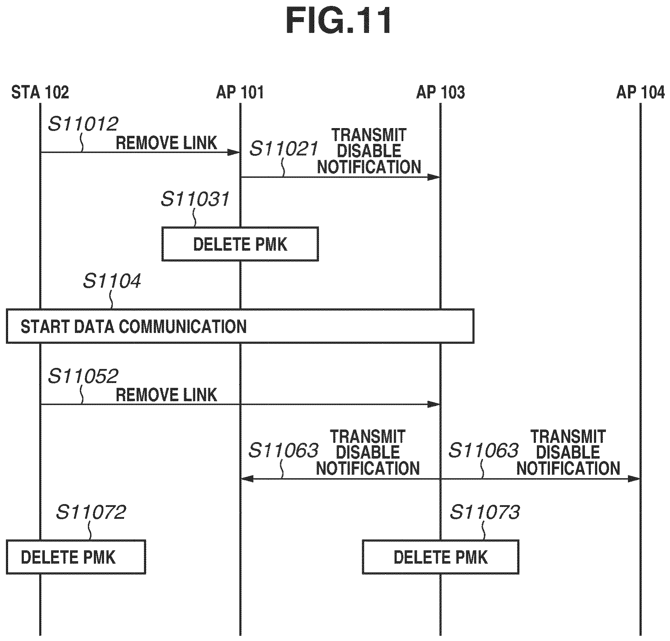

Next, Figs. 9 and 10 each illustrate a sequence in which the AP 101 and the STA 102 start communication and further connect to the AP 103. Fig. 11 illustrates a subsequent sequence from disconnection of the communication between the AP 101 and the STA 102 to disconnection of communication between the AP 103 and the STA 102.

First, the AP 101, the AP 103, and the AP 104 form an AP MLD based on the processing of S801 in Fig. 8 (S901).

After that, a connection request is sent from the STA 102 to the AP 101, and connection via a Multi-Link is performed. At this time, an MLD setup for exchanging ML Probe Request/Response is performed as an MLD connection, and a PMK and a PTK are generated by authentication and 4-way handshake (S902).

After the connection with the STA 102 is established, communication between the AP 101 and the STA 102 is started based on the generated parameters and a key (S903).

Steps S9041 to S9061 are respectively similar to steps S5041 to S5061 in the first exemplary embodiment, and thus descriptions thereof are omitted.

The STA 102 checks whether a reception strength of the Beacon from the AP 103 is high based on a BSS transition request received from the AP 101, or by periodic scanning or scanning due to a decrease in the reception strength of the Beacon by the STA 102. Then, the STA 102 transmits an Add Link Request to add a link to the AP 103 (S9072). This may be, for example, a procedure for the AP 103 to enable the corresponding link ID by TID-to-Link Mapping, or a procedure for connecting to the AP 103 by Reassociation.

Upon receiving a link addition notification from the STA 102, the AP 103 checks the contents of the connection request, checks the connected APs, and transmits a PMK Request to the AP 101 (S9083). The AP 101 returns the PMK and PTK according to the request (S9091). After that, the AP 103 may perform a Group Key Handshake with the STA 102.

After a link is added to the AP 103, the STA 102 communicates with the AP 101 and the AP 103 via the respective links using a common PTK (S910).

An Add Link notification from the STA 102 may be transmitted to the AP 101. Fig. 10 illustrates a sequence in this case. The steps up to S9061 are similar, and thus descriptions thereof are omitted. The STA 102 transmits an Add Link notification to the AP 101 (S10072). The frames to be used for the Add Link notification are described above. Upon receiving an Add Link frame, the AP 101 checks the link to be added and transmits parameters used for communication with the STA, including the PMK, to the AP 103 in a case where another AP is to be added (S10081). Upon receiving the parameters, the AP 103 may perform the Group Key Handshake with the STA 102. After that, the STA 102, the AP 101, and the AP 103 communicate with each other using the common PTK (S910).

The STA 102 issues a Remove Link notification to the AP 101 when a radio field intensity received from the AP 101 is less than or equal to a threshold (S11012). This may be performed by transmitting Deauthentication or Disassociation, or by not assigning TID to the link ID held by the AP 101 in a TID-to-Link Mapping Request.

Upon receiving the link removal notification from the STA 102, the AP 101 issues a Disable notification to the AP 103 in the vicinity (S11021). This makes it possible to identify, as the AP MLD, the connected STA. In the present exemplary embodiment, the Disable notification may be omitted. The AP 101 determines that the connection with the STA 102 is disconnected when the AP 101 receives a Remove Link, or when communication cannot be established with the STA 102 based on the heartbeat for a predetermined period, and deletes the PMK and PTK held in itself (S11031). If it is determined that the connection is disconnected based on the heartbeat, the AP 101 may transmit Deauthentication to the STA 102. Alternatively, the AP 101 may transmit the Deauthentication after confirming that there is no other connected AP. In a case where there is no other connected AP, by not transmitting the Deauthentication, it is possible to prevent the connection between the AP MLD and the STA 102 from being unnecessarily disconnected. To check the connection with the STA 102, an inquiry about a connection status may be sent to the other APs.

After the connection between the AP 101 and the STA 102 is disconnected, the AP 103 and the STA 102 perform data communication (S1104).

Next, the communication between the AP 103 and the STA 102 is terminated (S11052). In the present exemplary embodiment, a disconnection notification is transmitted from the STA 102 to the AP 103.

After confirming the disconnection from the STA 102, the AP 103 transmits information indicating the disconnection to the AP 101 and AP 104 in the vicinity as a Disable notification (S11063). Since the STA 102 has disconnected all links belonging to the AP MLD, the PMK and PTK are deleted after a lapse of a predetermined period (S11072). The AP 103 deletes the PMK and PTK after the lapse of the predetermined period since the AP 103 recognizes that there is no link that connects with the STA 102 as the AP MLD based on the disconnection notification from the STA 102 (S11073).

In this way, the AP 101 can appropriately generate and delete a PMK in a case where a plurality of APs forms an AP MLD when a multi-link connection is performed from the STA 102.

### (Other Exemplary Embodiments)

In the present exemplary embodiment, when a link is added or deleted, a notification is sent to other APs. However, for example, information about all STAs with which an AP is connected in the AP MLD may be periodically communicated, or communication may be performed only when there is a change and at a predetermined time.

While each exemplary embodiment is configured such that the PMK and PTK are shared, only one of the PMK and PTK may be shared. Information to be shared is not limited thereto, and any information about an encryption key for encrypting communication, such as information required for generating a PTK, for example, a PMK and a random number used in the 4-way handshake, may be used.

In the examples, the PMK and PTK are shared by a plurality of APs that cooperate with each other to function as one AP MLD, but instead the PMK and PTK may be managed by one AP. In the configuration in which the PMK and PTK are managed by one AP, assume that when each AP performs connection processing with the STA, an inquiry about the PMK and PTK for the target STA is sent to the AP that manages the PMK and PTK, and then the connection processing is performed.

A storage medium storing program codes of software for implementing the above-described functions may be supplied to a system or an apparatus, and a computer (CPU or MPU) of the system or the apparatus may read and execute the program codes stored in the storage medium. In this case, the program codes themselves read from the storage medium implements the functions of the above-described exemplary embodiments, and the storage medium storing the program codes constitutes the above-described apparatus.

As the storage medium for supplying the program codes, for example, a flexible disk, a hard disk, an optical disk, a magneto-optical disk, a CD-ROM, a CD-R, a magnetic tape, a nonvolatile memory card, a ROM, a DVD, or the like can be used.

The above-described functions may be implemented not only by executing the program codes read by the computer but also by causing an OS running on the computer to perform part or all of actual processing based on an instruction of the program codes. OS is an abbreviation for Operating System.

The program codes read from the storage medium may be written in a memory included in a function expansion board inserted into the computer or a function expansion unit connected to the computer. Then, a CPU included in the function expansion board or the function expansion unit may perform part or all of the actual processing based on an instruction of the program codes to implement the above-described functions.

The present invention can also be realized by processing in which a program that implements one or more functions of the above-described exemplary embodiments is supplied to a system or an apparatus via a network or a storage medium, and one or more processors in a computer of the system or the apparatus read and execute the program. The present invention can also be realized by a circuit (e.g., an ASIC) that implements one or more functions.

The present invention is not limited to the above exemplary embodiments, and various changes and modifications can be made without departing from the spirit and scope of the present invention. Accordingly, the following claims are appended to disclose the scope of the present invention.

This application claims the benefit of Japanese Patent Application No. 2023-034843, filed March 7, 2023, which is hereby incorporated by reference herein in its entirety.

## Claims

1. An access point device that performs communication with a station device, the access point device comprising:
establishment means for establishing a link for performing communication with the station device;
generation means for generating an encryption key for encrypting the communication with the station device; and
sharing means for sharing information about the encryption key with another access point device different from the access point device.

2. The access point device according to Claim 1, further comprising notification means for notifying the other access point device of information indicating that the link has been established in a case where the establishment means has established the link with the station device.

3. The access point device according to Claim 1 or 2, further comprising disconnection means for disconnecting a link between the station device and the access point device,
wherein, in a case where the disconnection means has disconnected the link with the station device, the notification means notifies the other access point device of information indicating that the link has been disconnected.

4. The access point device according to any one of Claims 1 to 3, wherein the sharing means shares the information about the encryption key with the other access point device via a server.

5. The access point device according to any one of Claims 1 to 4, wherein the sharing means encrypts the information about the encryption key and shares the encrypted information with another access point device.

6. The access point device according to any one of Claims 1 to 5, further comprising:
first reception means for receiving information indicating that another access point device has disconnected a link with a predetermined station device; and
deletion means for deleting an encryption key for encrypting communication with the predetermined station device in a case where the first reception means receives information indicating that the other access point device has disconnected the link with the predetermined station device, and neither the access point device nor the other access point device sharing the information about the encryption key has established a link with the predetermined station device.

7. The access point device according to Claim 6, wherein the deletion means deletes the encryption key after a predetermined period from when the first reception means receives the information indicating the disconnection.

8. The access point device according to any one of Claims 1 to 7, further comprising second reception means for receiving a predetermined signal indicating that another access point device has requested information about an encryption key,
wherein, in a case where the second reception means receives the predetermined signal, the sharing means shares the information about the encryption key by transmitting the information about the encryption key to the other access point device.

9. The access point device according to any one of Claims 1 to 8, further comprising transmission means for transmitting a predetermined signal to request the other access point to transmit information about an encryption key for encrypting communication with the station device in a case where the establishment means establishes a link with a predetermined station device in a state where the other access point device has established a link with the predetermined station device.

10. The access point device according to any one of Claims 1 to 9, wherein the information about the encryption key includes at least one of a PMK and a PTK.

11. An access point device that performs communication with a station device, the access point device comprising:
reception means for receiving an encryption key used for encrypting the communication with the station device from another access point device different from the access point device; and
transmission means for transmitting data encrypted using the received encryption key to the station device.

12. A control method for an access point device that performs communication with a station device, the control method comprising:
an establishment step of establishing a link for performing communication with the station device;
a generation step of generating an encryption key for encrypting the communication with the station device; and
a sharing step of sharing information about the encryption key with another access point device different from the access point device.

13. A program for causing a computer to function as the access point device according to any one of Claims 1 to 10.
